# FASCICULE DE BREVET EUROPEEN

(11) **EP 1 872 061 B1**
(45) Date de publication et mention de la délivrance du brevet: **21.08.2013**
(21) Numéro de dépôt: 06726163.6
(22) Date de dépôt: 31.03.2006
(51) Int. Cl.: F24F 7/06, F24F 11/00, F04D 27/00, F24F 11/02

(54) **PROCEDE DE REGULATION DE LA PRESSION FOURNIE PAR UN VENTILATEUR A VITESSE VARIABLE D UNE INSTALLATION DE VENTILATION**
VERFAHREN ZUR DRUCKREGELUNG EINES GEBLÄSES MIT VARIABLER GESCHWINDIGKEIT EINER LÜFTUNGSANLAGE
METHOD FOR CONTROLLING PRESSURE DELIVERED BY THE VARIABLE SPEED FAN OF A VENTILATION DEVICE

(30) Priorité: 22.04.2005 FR 0504068
(43) Date de publication de la demande: 02.01.2008
(73) Titulaire: ALDES AERAULIQUE, 69200 Venissieux Cedex (FR)
(72) Inventeur: BUSEYNE, Serge, F-31200 Toulouse (FR); LABAUME, Damien, F-31320 CASTANET TOLOSAN (FR)
(74) Mandataire: Maureau, Philippe
(86) Numéro de dépôt international: PCT/FR2006/000714
(87) Numéro de publication internationale: WO 2006/114491

(56) Documents cités:
- FR-A- 2 805 601
- FR-A- 2 835 598
- US-A- 5 019 757
- US-B1- 6 462 494

## Description

La présente invention a pour objet un procédé de régulation de la pression fournie par un ventilateur à vitesse variable, d'une installation de ventilation, et un dispositif pour la mise en oeuvre de ce procédé.

Ce procédé peut s'appliquer plus particulièrement, quoique non exclusivement, à la ventilation de locaux à usage tertiaire, ou d'habitations collectives, neufs ou dans le cadre de rénovation.

Pour assurer la ventilation de locaux, différentes techniques sont aujourd'hui utilisées : ventilation naturelle, hybride ou mécanique.

Dans le cas d'une ventilation mécanique, les ventilateurs couramment utilisés présentent des caractéristiques aérauliques telles que la pression disponible diminue lorsque le débit augmente.

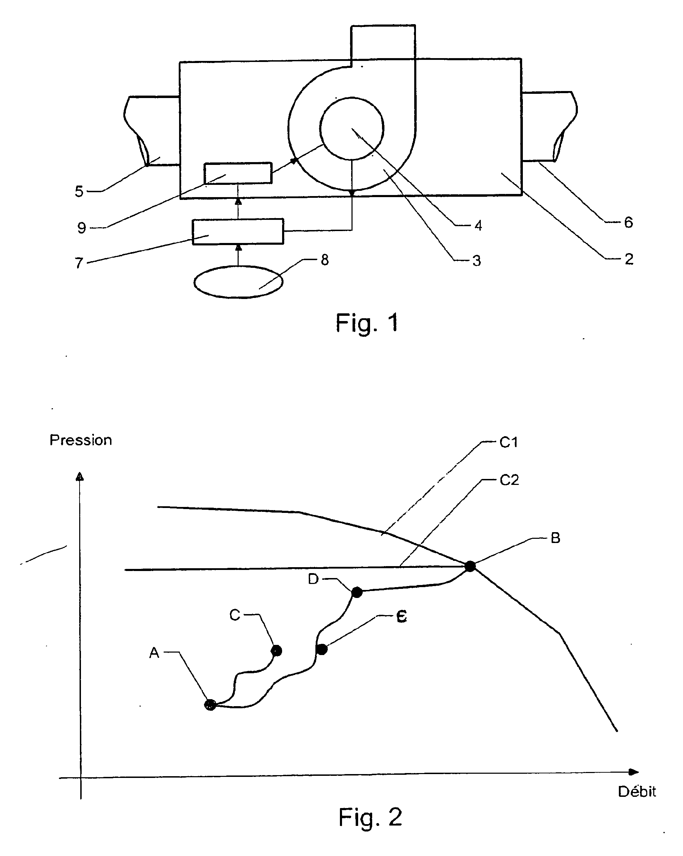

Une courbe caractéristique d'un ventilateur classique est désignée par la référence C1 de la figure 2 qui représente un diagramme débit-pression.

Il existe également des ventilateurs à pression constante, dont le principe repose sur une régulation de pression. La courbe d'un tel ventilateur est désignée par la référence C2 à la figure 2.

En outre, l'air véhiculé par le ventilateur passe par l'intermédiaire d'un réseau aéraulique afin de desservir les différents locaux à ventiler. Les caractéristiques débit-pression du réseau sont opposées à celles du ventilateur. En effet, la perte de charge du réseau augmente très fortement lorsque le débit augmente, puisque la perte de charge varie en fonction du carré du débit. Cela est aussi vrai pour la perte de charge des filtres.

En conséquence, lors de la conception d'une installation, il faut dimensionner celle-ci pour obtenir le point de fonctionnement maximal, c'est-à-dire débit maximum et pression maximale. Cependant, lorsque l'installation se trouve à un débit de moitié, la pression fournie par le ventilateur est généralement supérieure à la pression maximale et de toute façon très largement supérieure à la pression nécessaire pour son bon fonctionnement. Il en résulte des problèmes de surconsommation d'énergie, d'acoustique, et de dégradations des fuites dans le réseau.

Il est connu de réguler la pression du ventilateur en plaçant des capteurs de pression en partie terminale du réseau, c'est-à-dire à l'extrémité de chaque branche ou colonne du réseau. La pression au niveau du ventilateur peut être régulée à partir de ces informations, afin d'obtenir une pression constante en partie terminale de la branche la plus défavorisée. Cela permet, compte tenu de la physique des réseaux, d'augmenter la pression du ventilateur quand le débit augmente. Cette solution est très complexe à mettre en oeuvre puisqu'il est nécessaire d'obtenir l'information de pression en chaque point terminal du réseau. En outre, il faut disposer d'une carte électronique pour explorer en permanence les capteurs de pression et déterminer quelle est la colonne la plus défavorisée.

Le document FR-A-2805601 décrit un groupe de ventilation monté à l'intérieur d'un caisson munie d'orifices, dans lequel débouche plusieurs conduits. Ce groupe comporte un système de commande de la vitesse de rotation du ventilateur afin de maintenir la valeur de la pression différentielle constante et égale à une valeur de référence, pour maintenir le débit souhaité dans les orifices.

Le problème technique à la base de l'invention est de réaliser le réglage de la pression fournie par un ventilateur, de façon simple et économique, en tenant compte des différents paramètres inhérents au réseau et susceptibles de modifier les conditions de ventilation.

A cet effet, le procédé selon l'invention consiste à :
- définir les pertes de charges de l'installation et en déduire la pression minimale requise correspondant au débit minimum, et la pression maximale requise correspondant au débit maximum,
- définir une courbe débit-pression entre les deux points établis précédemment correspondant à la pression minimale et au débit minimum d'une part et à la pression maximale et au débit maximum d'autre part,
- mesurer le débit d'air passant dans le ventilateur, et calculer à partir de la courbe débit-pression la pression requise, puis
- commander la vitesse de rotation du ventilateur pour que celui-ci fournisse cette valeur de pression.

Il doit être noté que la courbe de référence débit-pression intègre les pertes de charges du réseau. En effet, à partir de la structure du réseau, il est possible d'intégrer les pertes de charges de celui-ci, de tenir compte du nombre d'ouïes du ventilateur raccordé à des branches différentes du réseau, en prenant en considération la pression minimale, le débit minimum, la pression maximale et le débit maximum. Il faut connaître le débit traversant le ventilateur. Il est possible de mesurer le débit à partir d'un élément déprimogène (tel que diaphragme ou croix de mesure), ou bien d'utiliser des solutions décrites dans les brevets 2 811 759 et 2 859 530 au nom de la Demanderesse.

Avantageusement, ce procédé consiste à mesurer en permanence le débit et à ajuster en permanence la pression correspondante.

Il peut être considéré que la courbe de référence est auto adaptative au circuit résistif qu'est le réseau. En pratique, il s'agit d'une courbe

montante, la pression augmentant quand le débit augmente, ce qui constitue une bien meilleure réponse aux besoins, en particulier au plan énergétique et au plan acoustique que les ventilateurs en caisson avec des courbes iso vitesse et ventilateurs régulés en pression avec des courbes iso pression.

Suivant un mode de mise en oeuvre de ce procédé, lorsque l'installation comporte plusieurs branches raccordées au ventilateur, il consiste à :
- calculer pour chaque branche une courbe débit-pression entre le débit minimum et le débit maximum dans cette branche, en considérant un débit minimum dans chacune des autres branches, et à
- définir une courbe de synthèse ou courbe idéale du ventilateur, résultant des courbes définies à l'étape précédente et passant par les points des deux courbes pour lesquels la pression est la plus grande, pour une pression de valeur donnée.

Avantageusement, ce procédé consiste à déterminer le débit d'air traversant le ventilateur, en procédant à des mesures d'informations électriques, telles qu'intensité et tension.

Suivant un autre aspect, l'invention concerne un dispositif pour la mise en oeuvre de ce procédé, comprenant un ventilateur à vitesse variable, relié au moins à un réseau de collecte d'air comprenant au moins une branche, caractérisé en ce qu'il comprend en outre un microcontrôleur contenant en mémoire la courbe débit-pression de l'installation tenant compte des pertes de charge du réseau et des besoins en ventilation de chaque branche de celui-ci, ce microcontrôleur recevant les informations du moteur du ventilateur pour définir le débit de celui-ci, puis calculant à partir de la courbe débit-pression la pression requise et commandant la vitesse de rotation du ventilateur pour obtenir cette pression.

De toute façon, l'invention sera bien comprise à l'aide de la description qui suit, en référence au dessin schématique annexé, représentant, à titre d'exemple non limitatif, une forme d'exécution de cette installation, avec représentation des courbes débit-pression associées.
Figure 1 est une vue schématique du ventilateur et des dispositifs associés.
Figures 2 et 3 sont deux courbes débit-pression respectivement en cours de construction de la courbe et après construction de la courbe avec rappel dans les deux cas des courbes caractéristiques d'un ventilateur classique et d'un ventilateur à pression régulée.

La figure 1 représente schématiquement un caisson 2 à l'intérieur duquel est monté un ventilateur 3 d'extraction d'air entraîné par un moteur 4 à vitesse variable. Dans le caisson 2 débouchent deux branches respectivement 5 et 6 d'un réseau de ventilation. Au ventilateur 3 est associé un microcontrôleur 7 contenant en mémoire la courbe débit-pression de l'installation tenant compte des paramètres du chantier et notamment des pertes de charge comme représenté par le bloc 8 de la figure 1. A ce ventilateur 3 est également associé un boîtier de commande 9 qui pilote le moteur 4 en fonction d'informations fournies par le microcontrôleur 7. Il doit être noté que le microcontrôleur 7 reçoit également des informations du moteur 4, informations relatives à l'intensité et à la tension du courant d'alimentation du moteur, ainsi qu'éventuellement ou alternativement des informations concernant la vitesse de rotation du ventilateur.

En pratique, la mise en oeuvre de cette installation est la suivante.

On calcule avec un logiciel classique des pertes de charge, la pression minimale de l'installation correspondant au débit minimum permettant l'établissement du point A. Le même calcul est effectué pour le débit maximum et la pression maximale de l'installation permettant l'établissement d'un point B.

On calcule ensuite par itérations successives le besoin de pression pour la première branche 5 jusqu'au débit maximum sur cette branche, en prenant pour hypothèse un débit minimum sur la branche 6. On obtient ainsi le point C.

De la même manière, on calcule par itérations successives le besoin de pression pour la branche 6 avec le débit maximum sur cette branche et le débit minimum sur la branche 5 ce qui permet d'obtenir le point D.

Le point E figurant sur le diagramme de la figure 2 est l'intersection d'une courbe de forme aX² + k1, et de la courbe entre A et D formée par une courbe de forme polynomiale, dont le degré maximum est égal au nombre de bouches à débit variable de la branche 6. k1 est égal à la perte de charge de la branche 5 pour un débit maximum.

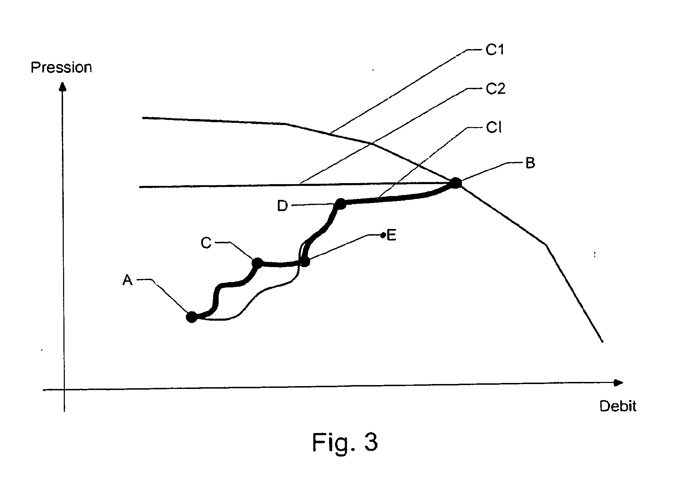

La courbe idéale du ventilateur qui est la résultante des courbes AC et AD est représentée en traits pleins à la figure 3.

Entre les points A et C, la courbe est de la forme polynomiale dont le degré maximum est égal au nombre de bouches à débit variable de la branche 5.

Entre le point C et le point E, il s'agit d'une courbe de forme aX² + k1.

Entre les points E et D, la courbe est de forme polynomiale dont le degré maximum est égal au nombre de bouches à débit variable de la branche 6.

Entre les points D et B, il s'agit d'une courbe de forme aX² + k2. k2 est égal à la perte de charge de la branche 6 au débit maximum.

Il doit être noté qu'en l'absence d'un réseau au refoulement, les équations de la forme Ax² + k deviennent des droites à pression constante.

Lorsque les courbes AC et AD se croisent, on retient toujours la valeur maximale pour obtenir la courbe idéale.

Dans le cas où le point C a une pression supérieure au point D, le point E n'existe plus et la courbe idéale entre les points C et B devient une courbe de forme aX² + k1.

L'exemple qui vient d'être décrit ci-dessus est celui d'un ventilateur d'extraction avec deux ouïes de raccordement à deux branches 5 et 6 du réseau ce qui implique la détermination de deux points intermédiaires C et D. Toutefois, le nombre de points intermédiaires pourrait être différent et égal au nombre d'ouïes de raccordement. Le procédé peut également être utilisé avec un ventilateur d'insufflation d'air.

En pratique, les paramètres du réseau, et notamment les pertes de charge, sont mémorisés dans le microcontrôleur. La courbe idéale débit-pression est également mémorisée dans le microcontrôleur.

Le microcontrôleur 7 reçoit des informations du moteur 4 du ventilateur, notamment intensité et tension, permettant de déterminer le débit instantané de l'air traversant le ventilateur 3.

Le microcontrôleur comprend un programme permettant, à partir du débit instantané traversant le ventilateur 3, de déterminer la pression nécessaire, en tenant compte de la courbe débit-pression mémorisée. Le microcontrôleur 7 fournit donc une information au boîtier de commande 9, qui agit sur le moteur 4, pour que le ventilateur délivre la pression requise.

Comme il va de soi, l'invention apporte une grande amélioration à la technique existante, en fournissant un dispositif de commande de la pression d'un ventilateur, de structure simple et performante, permettant d'une part, des économies d'énergie en adaptant strictement la pression au débit nécessaire, et en améliorant le confort du bâtiment en limitant le fonctionnement du ventilateur aux conditions de ventilation requises.

## Revendications

1. Procédé de régulation de la pression fournie par un ventilateur (3) à vitesse variable d'une installation de ventilation, **caractérisé en ce qu'**il consiste à :
- définir les pertes de charges de l'installation et en déduire la pression minimale requise correspondant au débit minimum, et la pression maximale requise correspondant au débit maximum,
- définir une courbe débit-pression (CI) entre les deux points (A, B) établis précédemment correspondant à la pression minimale et au débit minimum d'une part et à la pression maximale et au débit maximum d'autre part,
- mesurer le débit d'air passant dans le ventilateur, et calculer à partir de la courbe débit-pression la pression requise, puis
- commander la vitesse de rotation du ventilateur pour que celui-ci fournisse cette valeur de pression.

2. Procédé selon la revendication 1, **caractérisé en ce qu'**il consiste à mesurer en permanence le débit et à ajuster en permanence la pression correspondante.

3. Procédé selon l'une des revendications 1 et 2, **caractérisé en ce que**, lorsque l'installation comporte plusieurs branches (5, 6) raccordées au ventilateur (3), il consiste à :
- calculer pour chaque branche (5, 6) une courbe débit-pression (AC, AD) entre le débit minimum et le débit maximum dans cette branche, en considérant un débit minimum dans chacune des autres branches (6, 5), et à
- définir une courbe de synthèse ou courbe idéale (CI) du ventilateur, résultant des courbes définies à l'étape précédente et passant par les points des deux courbes pour lesquels la pression est la plus grande, pour une pression de valeur donnée.

4. Procédé selon l'une des revendications 1 à 3, **caractérisé en ce qu'**il consiste à déterminer le débit d'air traversant le ventilateur (3), en procédant à des mesures d'informations électriques, telles qu'intensité et tension.

5. Dispositif pour la mise en oeuvre du procédé selon l'une des revendications 1 à 4, comprenant un ventilateur (3) à vitesse variable, relié au moins à un réseau de collecte d'air comprenant au moins une branche (5, 6), **caractérisé en ce qu'**il comprend en outre un microcontrôleur (7) contenant en mémoire la courbe débit-pression (CI) de l'installation tenant compte des pertes de charge du réseau et des besoins en ventilation de chaque branche de celui-ci, ce microcontrôleur (7) recevant les informations du moteur (4) du ventilateur (3) pour définir le débit de celui-ci, puis calculant à partir de la courbe débit-pression (CI) la pression requise et commandant la vitesse de rotation du ventilateur (3) pour obtenir cette pression.

## Patentansprüche

1. Verfahren zur Regelung des Drucks, der von einem Lüfter (2) mit variabler Geschwindigkeit einer Lüftungsanlage bereitgestellt wird, **dadurch gekennzeichnet, dass** es darin besteht:
- Definition der Lastverluste der Anlage und Ableitung daraus des erforderlichen minimalen Drucks, der dem Mindestdurchsatz entspricht, und des erforderlichen maximalen Drucks, der dem maximalen Durchsatz entspricht,
- Definition einer Durchsatz-Druck-Kurve (CI) zwischen den zwei zuvor ermittelten Punkten (A, B), die dem minimalen Druck und dem minimalen Durchsatz einerseits und dem maximalen Druck und dem maximalen Durchsatz andererseits entsprechen,
- Messung des Luftdurchsatzes, der in den Lüfter geht, und Berechnung des erforderlichen Drucks mit Hilfe der Durchsatz-Druck-Kurve, und
- Steuerung der Drehgeschwindigkeit des Lüfters, damit dieser diesen Druckwert liefert.

2. Verfahren nach Anspruch 1, **dadurch gekennzeichnet, dass** es darin besteht, den Durchsatz ständig zu messen und den entsprechenden Druck ständig anzupassen.

3. Verfahren nach einem der Ansprüche 1 und 2, **dadurch gekennzeichnet, dass**, wenn die Anlage mehrere Abzweigungen (5, 6) aufweist, die mit dem Lüfter (3) verbunden sind, es darin besteht:
- Berechnung für jede Abzweigung (5, 6) einer Durchsatz-Druck-Kurve (AC, AD) zwischen dem minimalen Durchsatz und dem maximalen Durchsatz in dieser Abzweigung unter Berücksichtigung eines minimalen Durchsatzes in jeder der anderen Abzweigungen (6, 5), und
- Definition einer Synthese- oder idealen Kurve (CI) des Lüfters, die aus den Kurven resultiert, die im vorangehenden Schritt definiert wurden, und Erreichen über die Punkte der zwei Kurven, für die der Druck am größten ist, eines Drucks mit einem bestimmten Wert.

4. Verfahren nach einem der Ansprüche 1 bis 3, **dadurch gekennzeichnet, dass** es darin besteht, durch Durchführung von Messungen elektrischer Informationen wie Stromstärke und Spannung den Luftdurchsatz zu bestimmen, der den Lüfter (3) durchquert.

5. Vorrichtung zur Umsetzung des Verfahrens nach einem der Ansprüche 1 bis 4, die einen Lüfter (3) mit variabler Geschwindigkeit umfasst, der mit mindestens einem Luftsammelnetz verbunden ist, das mindestens eine Abzweigung (5, 6) umfasst, **dadurch gekennzeichnet, dass** sie ferner einen Microcontroller (7) umfasst, der im Speicher die Durchsatz-Druck-Kurve (CI) der Anlage enthält, die Lastverluste des Netzes und Lüftungsbedarfe jeder Abzweigung desselben berücksichtigt, wobei dieser Microcontroller (7) die Informationen des Motors (4) des Lüfters (3) erhält, um den Durchsatz desselben zu bestimmen, wobei er dann mit Hilfe der Durchsatz-Druck-Kurve (CI) den erforderlichen Druck berechnet und die Drehgeschwindigkeit des Lüfters (3) steuert, um diesen Druck zu erhalten.

## Claims

1. A method for regulating the pressure supplied by a variable-speed fan (3) of a ventilation installation, **characterized in that** it consists of:
- defining the pressure drops of the installation and deducing therefrom the minimum required pressure corresponding to the minimum flow rate, and the maximum required pressure corresponding to the maximum flow rate,
- defining a flow rate-pressure curve (CI) between the two previously established points (A, B) corresponding to the minimum pressure and the minimum flow rate on the one hand and the maximum pressure and the maximum flow rate on the other hand,
- measuring the air flow rate passing in the fan, and calculating the required pressure from the flow rate-pressure curve, then
- commanding the speed of rotation of the fan so that the latter provides that pressure value.

2. The method according to claim 1, **characterized in that** it consists of continuously measuring the flow rate and continuously adjusting the corresponding pressure.

3. The method according to one of claims 1 and 2, **characterized in that**, when the installation includes several branches (5, 6) connected to the fan (3), it consists of:
- calculating, for each branch (5, 6), a flow rate-pressure curve (AC, AD) between the minimum flow rate and the maximum flow rate **in that** branch, considering a minimum flow rate in each of the other branches (6, 5), and
- defining a synthesis curve or ideal curve (CI) of the fan, resulting from the curves defined in the previous step and passing through the points of the two curves for which the pressure is greatest, for a pressure with a given value.

4. The method according to one of claims 1 to 3, **characterized in that** it consists of determining the flow rate of air passing through the fan (3), by performing electrical information measurements, such as intensity and voltage.

5. A device for implementing the method according to one of claims 1 to 4, comprising a variable-speed fan (3), connected to at least one air collection grid comprising at least one branch (5, 6), **characterized in that** it further comprises a microcontroller (7) containing, in memory, the flow rate-pressure curve (CI) of the installation, taking into account the pressure losses of the grid and the ventilation needs of each branch thereof, said microcontroller (7) receiving the information from the motor (4) of the fan (3) to define the flow rate thereof, then calculating, from the flow rate-pressure curve (CI), the required pressure and commanding the speed of rotation of the fan (3) to obtain that pressure.
